# EUROPÄISCHE PATENTANMELDUNG

(11) **EP 1 331 800 A2**
(43) Veröffentlichungstag der Anmeldung: **30.07.2003**
(21) Anmeldenummer: 02026585.6
(22) Anmeldetag: 28.11.2002
(51) Int. Cl.: H04M 3/523

(54) **Call-Center sowie Verfahren zum Betreiben eines Call-Centers**

(30) Priorität: 23.01.2002 DE 10202499
(71) Anmelder: SIEMENS AKTIENGESELLSCHAFT, 80333 München (DE)
(72) Erfinder: Bock, Richard, 80337 München (DE); Herrmann, Uwe, 85560 Ebersberg (DE)

(57) **Zusammenfassung**

Die Erfindung betrifft ein Call-Center zum Betreiben automatisierter Call-Center-Dienste (DIE), bestehend aus Agentenarbeitsplätzen (AGE), welche über eine Telekommunikationsanlage (TKA) mit einem öffentlichen Telekommunikationsnetz (NET) verbunden sind, wobei die Agentenarbeitsplätze (AGE) untereinander über ein internes Kommunikationsnetzwerk (LAN) miteinander sowie mit zumindest einem Datenserver (DSE) verbunden sind, zumindest ein Diensteserver (SPPM, SPPM') vorgesehen ist, der mit dem internen Kommunikationsnetzwerk (LAN) verbunden ist, wobei auf dem Diensteserver (SPPM, SPPM') zumindest ein automatisierter Call-Center-Dienst (DIE) zumindest teilweise und zumindest zeitweise abläuft, und der zumindest eine Diensteserver (SPPM, SPPM') über zumindest einen Vermittlungsrechner (VER, VER') mit dem öffentlichen Telekommunikationsnetz verbindbar ist. Erfindungsgemäß wird der zumindest eine Call-Center-Dienste (DIE) auf dem Dienste-Server (SPPM, SPPM') von zumindest einem Dienste-Programmmittel (SPP) gesteuert. Weiters betrifft die Erfindung ein entsprechendes Verfahren.

## Beschreibung

Die Erfindung betrifft ein Call-Center zum Betreiben automatisierter Call-Center-Dienste, bestehend aus Agentenarbeitsplätzen, welche über eine Telekommunikationsanlage mit einem öffentlichen Telekommunikationsnetz verbunden sind, wobei die Agentenarbeitsplätze untereinander über ein internes Kommunikationsnetzwerk miteinander sowie mit zumindest einem Datenserver verbunden sind, zumindest ein Diensteserver vorgesehen ist, der mit dem internen Kommunikationsnetzwerk verbunden ist, wobei auf dem Diensteserver zumindest ein automatisierter Call-Center-Dienst zumindest teilweise und zumindest zeitweise abläuft, und der zumindest eine Diensteserver über zumindest einen Vermittlungsrechner mit dem öffentlichen Telekommunikationsnetz verbindbar ist.

Weiters betrifft die Erfindung ein Verfahren zum Betreiben automatisierter Call-Center-Dienste in einem Call-Center, welches aus Agentenarbeitsplätzen besteht, welche über eine Telekommunikationsanlage mit einem öffentlichen Telekommunikationsnetz verbunden sind, wobei die Agentenarbeitsplätze untereinander über ein internes Kommunikationsnetzwerk miteinander sowie mit zumindest einem Datenserver verbunden sind, zumindest ein Diensteserver vorgesehen ist, der mit dem internen Kommunikationsnetzwerk verbunden ist, wobei auf dem Diensteserver zumindest ein automatisierter Call-Center-Dienst zumindest teilweise und zumindest zeitweise abläuft, und der zumindest eine Diensteserver über zumindest einen Vermittlungsrechner mit dem öffentlichen Telekommunikationsnetz verbindbar ist.

Call-Center sind Dienstleistungseinrichtungen für Telekommunikationsaufgaben, speziell für die telefonische Unterstützung von Kundenbelangen. Call-Center werden in Unternehmen, im Banken- und im Versicherungswesen, in Versandhäusern, beim Direkt-Banking, im Support und in vielen weiteren Bereichen eingesetzt, bei denen eine telefonische Unterstützung, eine Beratung oder ein Verkauf möglich ist.

Der Vorteil von Call-Centern liegt in dem unmittelbaren Kontakt des Kunden zu der Firma. Zeitaufwendiges telefonisches Weiterverbinden entfällt ebenso wie die Nachfrage nach dem richtigen Ansprechpartner oder die Bitte um Rückruf, weil Call-Center mit entsprechenden Funktionen wie ACD ("Automatic Call Distribution"), EAS ("Expert Agent Selection"), und IVR ("Interactive Voice Response") ausgestattet sind.

Call-Center machen sich zunutze, dass der größte Teil an Unternehmenskontakten über die Telefonzentrale abgewickelt wird, dass in Handelsunternehmen die meisten Bestellvorgänge telefonisch abgewickelt werden, dass in der Regel nur ein geringer Teil der Anrufer den gewünschten Gesprächspartner erreicht und dass Anrufer ab einer bestimmten Wartezeit auflegen. Call-Center beheben diese Nachteile, weil sie unmittelbar möglichst alle Kundenwünsche erfüllen und damit die Kundenzufriedenheit steigern können. Diese Ziele werden durch effizient eingesetzte Technik erreicht, bei der durch die Integration von Telefonnebenstellenanlage, Computern und Datenbanksystemen ein schneller Zugriff auf alle relevanten Daten, ob Kundendaten oder technische Daten, gewährleistet ist.

Von der Aufgabenstellung her unterscheidet man zwischen CallCentern, die nur ankommende Telefonate bearbeiten, sogenannte Inbound Call-Center, und solche, die nur ausgehende Telefonate abwickeln, beispielsweise zum Direkt-Marketing oder zur Neukunden-Gewinnung. Solche Call-Center werden. "Outbound Center" genannt. Die Mitarbeiter von Call-Centern werden Agents genannt.

Callcenter werden vermehrt auch für automatisierte (Call Center)-Dienste eingesetzt, wie beispielsweise das Routen von Rufen innerhalb des Call-Centers oder das automatische Buchen, Bestellen etc. über das Internet.

Nachteilig an den bisher eingesetzten Lösungen ist allerdings, dass für jeden automatisierten Call-Center-Dienst bisher jeweils eine eigene Lösung mit entsprechenden Interfaces implementiert werden muss. Für das Starten von für den jeweiligen Dienst benötigten Komponenten ist der jeweilige Dienst selbst verantwortlich. Die Verwaltung von gemeinsam von mehreren Diensten genutzten Komponenten findet nicht statt, weswegen Call-Center-Dienste - auch wenn sie auf der gleichen Hardware ablaufen - nicht gemeinsam administriert und gewartet werden können.

Es ist eine Aufgabe der Erfindung, den Einsatz von automatisierten Call-Center-Diensten in Call-Centern effektiver zu und wesentlich einfacher zu gestalten.

Diese Aufgabe wird mit einem eingangs erwähnten Call-Center dadurch gelöst, dass erfindungsgemäß auf dem Dienste-Server der zumindest eine Call-Center-Dienste von zumindest einem Dienste-Programmmittel gesteuert wird.

Erfindungsgemäß wird somit zwischen einem Betriebssystem und den Diensten eine neue Schicht in Form von einem oder mehreren Dienste-Programmmitteln eingeführt, und es wird auf diese Weise möglich, mehrere Call-Center-Dienste auf einer Hardware-Plattform einzusetzen, welche dann von einer gemeinsamen Instanz, eben den Dienste-Programmmitteln, überwacht und gesteuert werden.

Dabei ist der zumindest eine Diensteserver über Datenleitungen mit dem zumindest einen Vermittlungsrechner verbunden.

Besonders einfach und kostengünstig lässt sich das erfindungsgemäße Call-Center realisieren, wenn der zumindest eine Vermittlungsrechner Bestandteil der Telekommunikationsanlage des Call-Centers ist.

Einfach und zuverlässig lässt sich die Erfindung realisieren, wenn das zumindest eine Dienste-Programmmittel, bei der es sich üblicherweise um eine entsprechend eingerichtete Software handelt, auf dem Dienste-Server abläuft.

Damit das Verwenden beliebiger Dienste und ein einfaches Implementieren neuer Dienste möglich ist, weist das Dienste-Programmmittel einheitliche Schnittstellen für die Kommunikation mit den Call-Center-Diensten auf.

Die Schnittstellen sind dabei in der Regel Softwareschnittstellen.

Damit eine reibungslose Kommunikation der Call-Center-Dienste mit einer Gegenstelle außerhalb des Call-Centers möglich ist, ist vorgesehen, dass auf dem Dienste-Server zumindest zeitweise Kommunikationskomponenten für die Kommunikation der Call-Center-Dienste mit den Vermittlungsrechnern ablaufen, welche dann die Verbindung zu der jeweiligen Gegenstelle herstellen.

Diese Kommunikationskomponenten, bei denen es sich üblicherweise um eine entsprechende Software handelt, werden in der Regel von dem Diensteprogrammmittel, also der Dienste-Software zur Verfügung gestellt.

An dieser Stelle sei erwähnt, dass es sich bei einem Call-Center-Dienst um Software handelt, von der allerdings auch nicht unbedingt alle Komponenten auf dem Service-Provider-Plattform-Maschine ablaufen müssen, sondern andere Bestandteile der Software auch auf anderer Hardware ablaufen können.

Wie bereits erwähnt, handelt es sich bei den Kommunikationskomponenten üblicherweise um Softwarestacks.

Damit nicht mehr jeder Dienst separat und von sich selbst gestartet werden muss, ist weiters vorgesehen, dass der zumindest eine Dienste-Server dazu eingerichtet ist, die Dienste-Software (SPP) und/oder die Komponenten bei einem Starten des Dienste-Servers zu starten.

Bei diesen Diensten, die anstartbar, stoppbar, wiederanstartbar und beendbar sind, handelt es sich um Software, die auf dem Dienste-Server abläuft.

Weiters ist der zumindest eine Dienste-Server dazu eingerichtet ist, die gestarteten Komponenten bzw. die Dienste-Software zu initialisieren, wobei sich während des Initialisierens die Dienste bei der Dienste-Software anmelden.

Damit ein ausfallsicherer Betrieb gewährleistet ist, sind die Komponenten bzw. die Software stoppbar und wieder anstartbar sind.

Im Sinne einer einfachen und übersichtlichen Bedienung und Überwachung der Dienste ist es weiters, wenn der zumindest eine Dienste-Server mit zumindest einer Konsole verbindbar ist, welche für das Starten und/oder Anhalten und/oder Wiederanstarten von Komponenten und/oder von Dienste-Software auf dem Dienste-Server eingerichtet ist.

In diesem Sinne ist es auch, wenn die zumindest eine Konsole dazu eingerichtet ist, den Zustand einzelner Call-Center-Dienste anzuzeigen.

Schließlich ist es für ein gutes und problemloses Funktionieren der Call-Center-Dienste noch günstig, wenn diese dazu eingerichtet sind, Zustandsmeldungen und/oder Alarmmeldungen und/oder andere Daten betreffend die Dienste bzw. einen Dienste-Server an die zumindest eine Konsole zu senden, und die zumindest eine Konsole dazu eingerichtet ist, diese Meldungen entgegenzunehmen und zumindest anzuzeigen. Bei den angeführten "anderen Daten" handelt es sich beispielsweise um Daten betreffend die installierten Dienste, z.B. Portkonfigurationen eines Buchungsdienstes, etc. Diese Daten sind abhängig von dem installierten Dienst. Die Übermittlung insbesondere der Daten erfolgt über eine eigene generische Meldungsschnittstelle.

Die Dienste können in der Regeln generalisierte Stati, Alarme etc. übermitteln. Üblicherweise sind aber unterschiedliche Dienste auch noch in der Lage, voneinander unterschiedliche, dienstspezifische Daten an die Dienstesoftware zu übermitteln. Damit dies möglich ist, werden von den Diensten eigene Dienste-Komponenten (Darstellungs-Komponenten) zur Verfügung gestellt, welche auf der Konsole ablaufen und dienstspezifischer Daten entgegennehmen und auf der Konsole darstellen.

Bei diesen Diensten, die wiederum anstartbar, stoppbar, wiederanstartbar und beendbar sind, handelt es sich wiederum um Software, die auf dem Dienste-Server abläuft. Mittels der Konsole können diese Handlungen wie Starten etc. beispielsweise von einem Bedienpersonal der Konsole vorgenommen werden. Dies ist beispielsweise dann günstig, wenn ein Dienst nicht mehr (einwandfrei) läuft, und man andere parallel laufende Dienste nicht stören möchte.

Weiters wird die oben genannte Aufgabe mit einem eingangs erwähnten Verfahren dadurch gelöst, dass erfindungsgemäß auf dem Dienste-Server der zumindest eine Call-Center-Dienste von zumindest einem Dienste-Programmmittel gesteuert wird.

Auf die weiteren vorteilhaften Ausgestaltungen des erfindungsgemäßen Verfahrens wurde bereits im Zusammenhang mit den Vorteilen des Call-Centers näher eingegangen.

Im folgenden ist die Erfindung an Hand der Zeichnung näher erläutert. In dieser zeigen
Fig. 1 den prinzipiellen Aufbau eines erfindungsgemäßen Call-Centers,
Fig. 2 schematisch das Einbetten von automatisierten Call Center-Diensten in einem Call-Center,
Fig. 3 ein Schnittstellendiagramm mit den entsprechenden Datenströmen, und
Fig. 4 eine beispielhafte Implementierung eines automatisierten Call-Center-Dienstes.

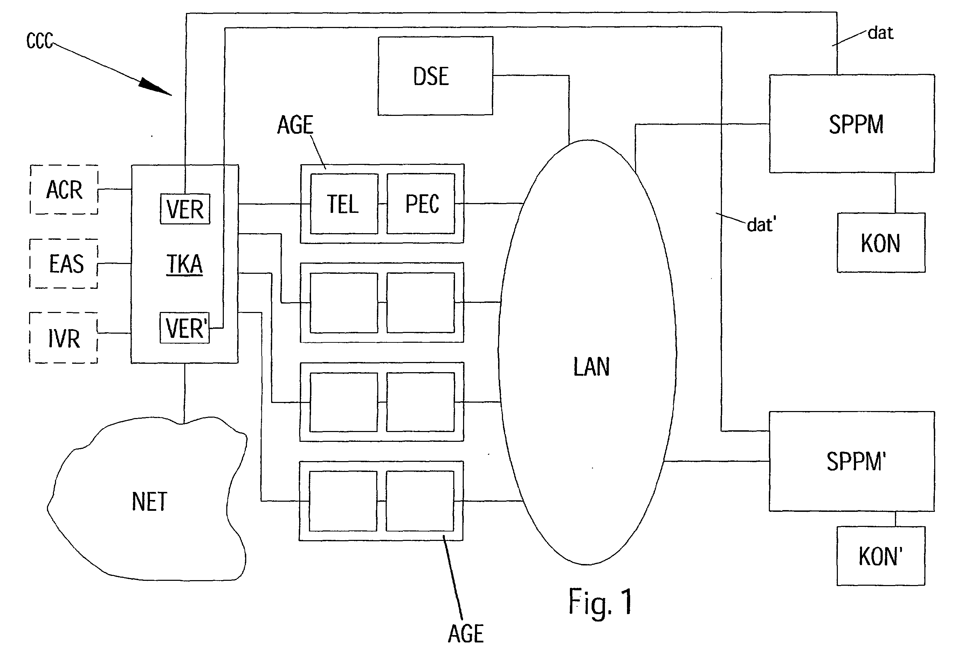

Die Fig. 1 zeigt ein Call-Center CCC, welches in herkömmlicher Weise aus eine Anzahl von Agentenarbeitsplätzen AGE besteht, welche über eine Telekommunikationsanlage, beispielsweise eine Nebenstellenanlage TKA mit dem öffentlichen Telefonnetz NET verbunden sind.

Die Agentenarbeitsplätze AGE bestehen dabei üblicherweise aus einem Telekommunikationsendgerät TEL sowie einem Ein-Ausgabegerät, üblicherweise zumindest aus einem Personalcomputer PEC. In der Regel stehen die Telekommunikationsendgeräte TEL sowie die Computer PEC miteinander in Verbindung, beispielsweise durch eine in dem Computer COM integrierte ISDN-Karte.

Weiters sind die Agentenarbeitsplätze AGE über ein internes Netzwerk LAN miteinander und mit einem oder mehreren Datenservern DSE verbunden. Das Call-Center bietet mittels der Telekommunikationsanlage TKA verschiedene Dienstleistungsmerkmale wie "Expert Agent Selection" EAS, mit welcher Rufnummern von Anrufenden analysiert und direkt an den zuständigen Sachbearbeiter weitergeleitet werden können, "Interactive Voice Response" IVR, bei dem es sich um ein dialogorientiertes Sprachsystem zur Entlastung von Routine-Aufgaben und zur Warteschlangenverwaltung in Call-Centern handelt, wobei IVR im Zusammenhang mit Unified Messaging die Implementierung eines sprachgeführten Menüs, bei dem der Benutzer die Möglichkeit besitzt, über Tastendruck oder Sprache zwischen verschiedenen Optionen zu wählen, ermöglicht, oder "Automatic Call Distribution" ACR ("Automatische Anrufweiterleitung") , etc. an, wie dies einleitend bereits erwähnt wurde.

Gemäß der vorliegenden Erfindung weist ein solches Call-Center CCC nun zumindest noch einen Diensteserver SPPM, SPPM', im folgenden auch als Service-Provider-Platform-Maschine bezeichnet, auf, auf der zumindest ein Call-Center-Dienst DIE (= Service Provider), eine Dienste-Software SPP (=Service Provider Plattform) und eine oder mehrere Komponenten KOM ablaufen.

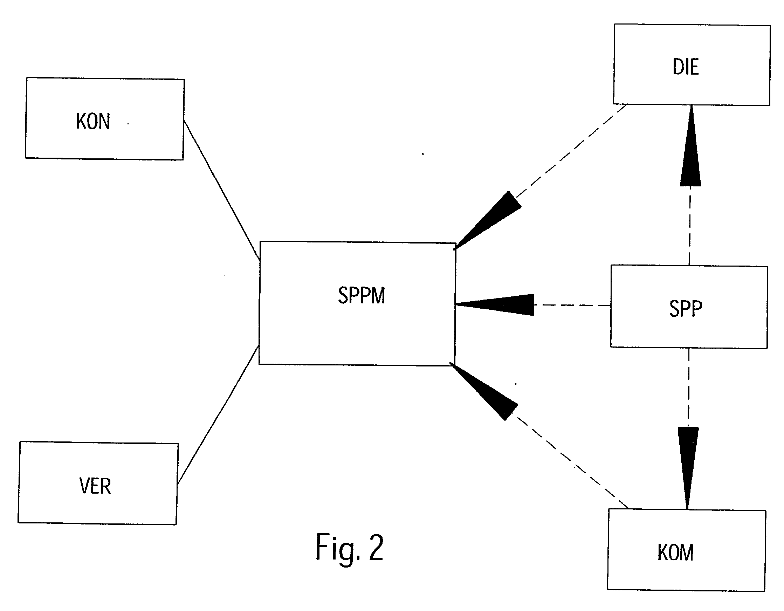

In Fig. 2 ist der grundsätzliche Zusammenhang zwischen den einzelnen Hard- und Softwarekomponenten dargestellt. Im Zentrum steht der Diensteserver bzw. die Serviceprovider-Plattform-Maschine SPPM, SPPM', die über Datenleitungen dat, dat' (siehe Fig. 1) mit einem oder mehreren Vermittlungsrechnern VER, VER', der/die üblicherweise Bestandteil der Telekommunikationsanlage TKA ist/sind, verbunden sind. Weiters sind die Dienste-Server SPPM, SPPM' noch je mit einer Konsole KON, KON' verbunden, wobei aber grundsätzlich auch nur eine Konsole für mehrere Dienste-Server vorgesehen sein kann.

Wie nun der Figur 2 zu entnehmen, läuft auf der Service-Provider-Plattform-Maschine SPPM eine Dienste-Software SPP ab, ebenso wie ein oder mehrere Call-Center-Dienste DIE. Ebenso laufen auf der Plattform-Maschine SPPM noch eine oder mehrere Komponenten KOM, die gegebenenfalls von einem Call-Center-Dienst benutzt werden, auf der Serviceprovider-Plattform-Maschine SPPM ab, wobei diese Komponenten KOM ebenso wie die Dienste DIE selbst von der Service-Provider-Plattform (d.h. der Dienste-Software) DIE verwaltet werden.

Der Vermittlungsrechner VER ist über Datenleitungen dat physikalisch mit der Service Provider Plattform Maschine SPPM verbunden. Die Kommunikation der Service-Provider-Plattform-Maschine SPPM und somit auch der Call-Center-Dienste DIE mit dem Vermittlungsrechner VER und somit mit anderen Endgeräten, die über das öffentliche Netz NET mit dem Call-Center CCC kommunizieren, wird dabei unter Verwendung der (Kommunikations-)Komponenten KOM, die wie bereits beschrieben auf der Service-Provider-Plattform-Maschine SPPM ablaufen, ermöglicht. Bei diesen Komponenten handelt es sich dabei beispielsweise um Software-Stacks.

Die Komponenten KOM sind dabei in der Regel Protokolle, welche die Kommunikation zwischen dem Vermittlungsrechner VER und dem Dienste-Server SPPM ermöglichen.

Weiters ist der Dienste-Server SPPM noch mit einer Konsole KON, einer sogenannten Maintenance-Konsole verbunden. Dabei handelt es sich um einen Einrichtung, mit der Steuer- und Kontrollaufgaben für verschiedenen Einrichtungen im Call-Center, insbesondere für die Service-Provider-Plattform-Maschine SPPM wahrgenommen werden können. elektrische und elektronische Einrichtungen durchgeführt werden. Üblicherweise ist für eine solche Konsole eine Person mit besonderen Zugangsrechten, ein sogenannter Systemoperator, zuständig.

Die Konsole KON ist unter anderem für das Starten, Anhalten und Wiederanstarten der auf der Service-Provider-Plattform-Maschine SPPM ablaufenden Komponenten KOM sowie der ebenfalls dort ablaufenden Dienste-Software DIE zuständig.

Weiters ist die zumindest eine Konsole KON, KON' dazu eingerichtet ist, den Zustand einzelner Call-Center-Dienste DIE anzuzeigen, sodass ständig Informationen vorliegen, an Hand welcher das Funktionieren bzw. allfällige Probleme im Ablauf der Dienste-Software DIE nachvollzogen werden können.

Von der Konsole KON, KON' können weiters von den Call-Center-Diensten DIE generierte Zustandsmeldungen, Alarmmeldungen und andere Daten - wie oben bereits näher erläutert - betreffend die Dienste DIE bzw. den Dienste-Server SPPM, SPPM' entgegengenommen werden, wo sie dann ausgegeben werden, beispielsweise auf einer Anzeige, und vorher gegebenenfalls noch ausgewertet werden.

Hinsichtlich der automatisierten Dienste sind neben den bereits angeführten Diensten beispielsweise auch noch geplant Zeit- und Gebühren Provider per E-Mail und/oder SMS, Statistik Provider, Buchungs-Provider, CSTA-Provider ("Computer Supported Telecommunications Application") etc.

Ein Zeit-/Gebühren-Provider beispielsweise sendet dem Kunden Gebühreninformationen über getätigte Gespräche; ein Statistik-Provider sammelt Anrufstatistiken des Vermittlungsrechners. Ein "CSTA"-Provider steuert das Routing von Anrufen. Ein Buchungs-Provider ermöglicht es, Buchungen über das Internet abzusetzen. Die Buchungen werden dann über den Provider an die Vermittlungsanlage übermittelt.

Diese Aufzählung ist aber in keiner Hinsicht vollständig, und die Erfindung ist natürlich auch für andere, nicht aufgezählte Dienste sowie für noch entstehende Dienste ebenso anwendbar.

Ein wesentlicher Vorteil der vorliegenden Erfindung liegt nun darin, dass aufgrund der neuen Infrastruktur des erfindungsgemäßen Call-Centers CCC ein neuer, automatisierter Call-Center-Dienst DIE nun einfach dadurch in die bestehende Konfiguration eingebracht werden kann, dass dieser die entsprechenden Schnittstellen zu der Service-Provider-Plattform SPP, d.h. zu der Dienstesoftware, unterstützt. Damit kann dann dieser neue Dienst gestartet, beendet, wiederangestartet und überwacht werden. Zusätzlich ist die Übertragung seines Zustandes sowie von Meldungen, wie Alarmmeldungen etc. möglich.

Damit auch dienstspezifische Daten Überwachungsdaten angezeigt werden können, wird von dem jeweiligen Dienst eine entsprechende Softwarekomponente DKO bereitgestellt, die dann von der Maintenance-Konsole KON zur Laufzeit gebunden- die Maintenance-Konsole ruft also diese (Darstellungs-)Komponente DKO auf, wenn dienstbezogene Daten an der Konsole einlangen - und dann verwendet wird.

Für das Funktionieren der Erfindung ist es dabei notwendig, dass die Dienstesoftware SPP einheitliche Schnittstellen zur Verfügung stellt, die dann von allen Call-Center-Diensten genutzt werden können. Auf diese Weise ist die Implementierung neuer Call-Center-Dienste möglich, ohne dass Änderungen an der Service-Provider-Plattform oder der Maintenance-Konsole vorgenommen werden müssen.

Gemäß der Erfindung ist es nun möglich, dass eine Reihe von Call-Center-Diensten auf einer Plattform SPPM ablaufen, die gemeinsam gesteuert, koordiniert und überwacht werden.

In der Regel wird ein Call-Center CCC mit einer solchen Software-Provider-Plattform-Maschine SPPM auskommen, es kann aber durchaus aus verschiedenen Gründen auch vorgesehen sein, dass noch zusätzliche solcher Plattform-Server SPPM' in das Call-Center CCC eingebunden sind, wie dies auch in Figur 2 dargestellt ist. Dabei weist gemäß Figur 2 jeder Plattform-Server SPPM, SPPM' eine eigenen Konsole KON, KON' auf, es kann aber auch vorgesehen sein, dass nur eine Konsole alle Plattform-Server SPPM, SPPM' überwacht.

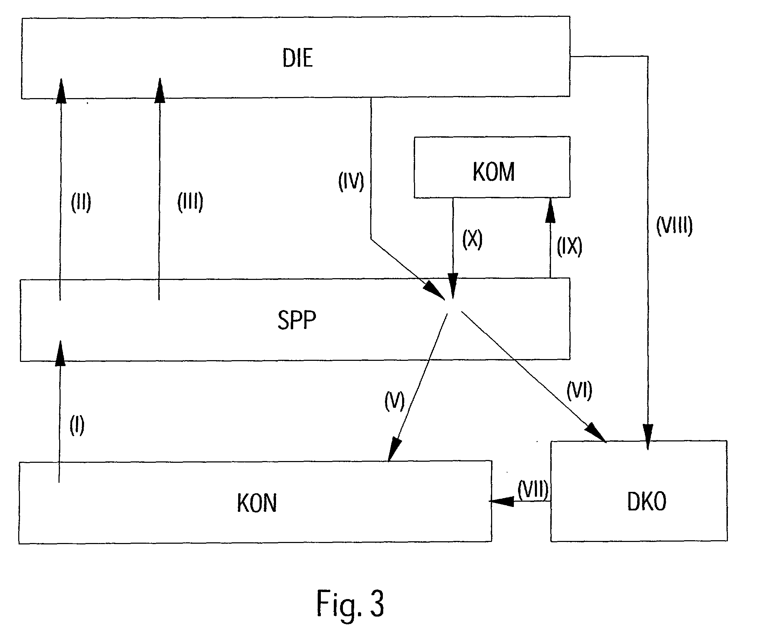

Zum besseren Verständnis der Abläufe ist in Figur 3 noch ein Schnittstellendiagramm zwischen den einzelnen Softwareprogrammen dargestellt, auf die im folgenden kurz noch näher eingegangen werden soll:
(I): Von der Konsole KON werden Befehle zum Starten, Beenden und Wiederanstarten der Service-Provider-Plattform SPP an den Dienste-Server übermittelt.
(II): Die Service-Provider-Plattform SPP startet, beendet und wiederanstartet die Call-Center-Dienste DIE.
(III) : Weiters werden diese Call-Center-Dienste von der Service-Provider-Plattform SPP überwacht.
(IV) : Zustände, Alarme und dienstspezifische Monitoring-Daten werden an die Service-Provider-Plattform SPP übermittelt.
(V): Zustände und Alarme werden an der Konsole KON angezeigt.
(VI), (VII): Die dienstspezifischen Monitoring-Daten werden über entsprechende (Darstellungs-)Komponenten DKO von der Konsole KON entgegengenommen und angezeigt.
(VII), (VIII): Die dienstspezifischen Monitoring-Daten können auch direkt, ohne den Umweg über die Service-Provider-Plattform SPP, über entsprechende (Darstellungs-)Komponenten DKO von der Konsole KON entgegengenommen und angezeigt werden.
(IX) : Außerdem werden von der Service-Provider-Plattform SPP noch Kommunikationskomponenten KOM (wie weiter oben schon näher erläutert) gestartet, beendet und wiederangestartet, initialisiert und überwacht, und
(X) : diese melden spezifische Komponenten-Daten an die Service-Provider-Plattform SPP.

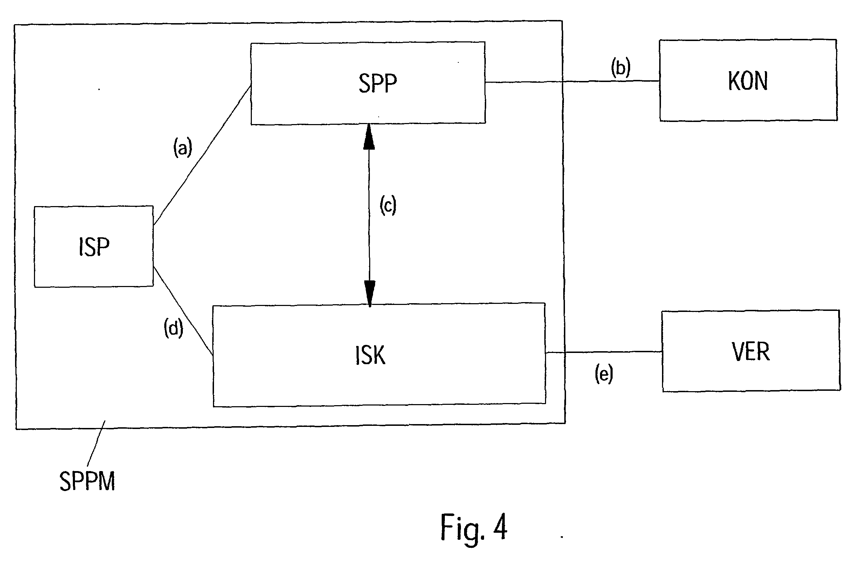

In Figur 4 ist schließlich noch ein konkretes Beispiel einer Implementierung eines Call-Center-Dienstes ISP ("Internet Service Provider") dargestellt.

Der spezielle automatisierte Call-Center-Dienst ISP wird dabei von der Service-Provider-Plattform SPP gestartet, beendet, wiederangestartet, überwacht, und es werden Zustandsmeldungen, Alarme und dienstspezifische Monitoring-Daten entgegengenommen (a) und an eine Maintenance-Konsole KON weitergeleitet (b), wo diese dann ausgegeben werden.

Weiters werden von der Service-Provider-Plattform SPP spezifische Komponenten ISK gestartet, initialisiert, beendet, wiederangestartet und überwacht (c), und über diese Kommunikations-Komponente ISK, die den bidirektionalen Transport von Daten erlaubt, kann dann der Dienst ISP eine Datenverbindung aufbauen, diese verwenden und auch wieder abbauen (d), wobei diese Verbindung dann von der Komponente ISK über den Vermittlungsrechner VER realisiert wird (e), sodass die Kommunikation mit einer Gegenstelle über ein Telekommunikationsnetz, das mit dem Vermittlungsrechner VER verbunden ist, und dem Call-Center-Dienst ISP möglich wird.

## Patentansprüche

1. Call-Center zum Betreiben automatisierter Call-Center-Dienste (DIE), bestehend aus Agentenarbeitsplätzen (AGE), welche über eine Telekommunikationsanlage (TKA) mit einem öffentlichen Telekommunikationsnetz (NET) verbunden sind, wobei die Agentenarbeitsplätze (AGE) untereinander über ein internes Kommunikationsnetzwerk (LAN) miteinander sowie mit zumindest einem Datenserver (DSE) verbunden sind, zumindest ein Diensteserver (SPPM, SPPM') vorgesehen ist, der mit dem internen Kommunikationsnetzwerk (LAN) verbunden ist, wobei auf dem Diensteserver (SPPM, SPPM') zumindest ein automatisierter Call-Center-Dienst (DIE) zumindest teilweise und zumindest zeitweise abläuft, und der zumindest eine Diensteserver (SPPM, SPPM') über zumindest einen Vermittlungsrechner (VER, VER') mit dem öffentlichen Telekommunikationsnetz verbindbar ist,
**dadurch gekennzeichnet, dass**
auf dem Dienste-Server (SPPM, SPPM') der zumindest eine Call-Center-Dienste (DIE) von zumindest einem Dienste-Programmmittel (SPP) gesteuert wird.

2. Call-Center nach Anspruch 1,
**dadurch gekennzeichnet, dass** der zumindest eine Diensteserver (SPPM, SPPM')über Datenleitungen (dat, dat') mit dem zumindest einen Vermittlungsrechner (VER, VER') verbunden ist.

3. Call-Center nach Anspruch 1 oder 2,
**dadurch gekennzeichnet**, der zumindest eine Vermittlungsrechner (VER, VER') Bestandteil der Telekommunikationsanlage (TKA) des Call-Centers (CCC) ist.

4. Call-Center nach einem der Ansprüche 1 bis 3,
**dadurch gekennzeichnet, dass** das zumindest eine Dienste-Programmmittel (SPP) auf dem Dienste-Server (SPPM, SPPM') abläuft.

5. Call-Center nach einem der Ansprüche 1 bis 4,
**dadurch gekennzeichnet, dass** das Dienste-Programmmittel (SPP) einheitliche Schnittstellen für die Kommunikation mit den Call-Center-Diensten (DIE) aufweist.

6. Call-Center nach einem der Ansprüche 1 bis 5,
**dadurch gekennzeichnet, dass** die Schnittstellen Softwareschnittstellen sind.

7. Call-Center nach einem der Ansprüche 1 bis 6,
**dadurch gekennzeichnet, dass** auf dem Dienste-Server (SPPM, SPPM') zumindest zeitweise Kommunikationskomponenten (KOM) für die Kommunikation der Call-Center-Dienste (DIE) mit den Vermittlungsrechnern (VER, VER') ablaufen.

8. Call-Center nach Anspruch 7,
**dadurch gekennzeichnet, dass** die Kommunikationskomponenten (KOM) zumindest teilweise von dem Dienste-Programmmittel (SPP) zur Verfügung gestellt werden.

9. Call-Center nach Anspruch 7 oder 8,
**dadurch gekennzeichnet, dass** die Kommunikationskomponenten (KOM) Softwarestacks sind.

10. Call-Center nach einem der Ansprüche 1 bis 9,
**dadurch gekennzeichnet, dass** der zumindest eine Dienste-Server (SPPM, SPPM') dazu eingerichtet ist, die Dienste-Software (SPP) und/oder die Komponenten (KOM) bei einem Starten des Dienste-Servers zu starten.

11. Call-Center nach Anspruch 10,
**dadurch gekennzeichnet, dass** der zumindest eine Dienste-Server (SPPM, SPPM') dazu eingerichtet ist, die gestarteten Komponenten (KOM) bzw. die Dienste-Software (SPP) zu initialisieren.

12. Call-Center nach einem der Ansprüche 1 bis 11,
**dadurch gekennzeichnet, dass** die Komponenten (KOM) bzw. die Software(SPP) stoppbar und wieder anstartbar sind.

13. Call-Center nach einem der Ansprüche 1 bis 12,
**dadurch gekennzeichnet, dass** der zumindest eine Dienste-Server (SPPM, SPPM') mit zumindest einer Konsole (KON) verbindbar ist, welche für das Starten und /oder Anhalten und/oder Wiederanstarten von Komponenten (KOM) und/oder von Dienste-Software (SPP) auf dem Dienste-Server eingerichtet ist.

14. Call-Center nach Anspruch 13,
**dadurch gekennzeichnet, dass** die zumindest eine Konsole (KON, KON') dazu eingerichtet ist, den Zustand einzelner Call-Center-Dienste (DIE) anzuzeigen.

15. Call-Center nach Anspruch 13 oder 14,
**dadurch gekennzeichnet, dass** die Call-Center-Dienste (DIE) dazu eingerichtet sind, Zustandsmeldungen und/oder Alarmmeldungen und/oder andere dienstspezifische Daten betreffend die Dienste (DIE) bzw. einen Dienste-Server (SPPM, SPPM') an die zumindest eine Konsole (KON, KON') zu senden, und die zumindest eine Konsole (KON, KON') dazu eingerichtet ist, diese Meldungen entgegenzunehmen und zumindest anzuzeigen.

16. Call-Center nach Anspruch 14 oder 15,
**dadurch gekennzeichnet, dass** von den Diensten (DIE) eigene Dienste-Komponenten (DKO) zur Verfügung gestellt werden, welche auf der Konsole (KON, KON') ablaufen und die Entgegennahme dienstspezifischer Daten auf der Konsole (KON, KON') erlauben.

17. Verfahren zum Betreiben automatisierter Call-Center-Dienste (DIE) in einem Call-Center (CCC), welches aus Agentenarbeitsplätzen (AGE) besteht, welche über eine Telekommunikationsanlage (TKA) mit einem öffentlichen Telekommunikationsnetz (NET) verbunden sind, wobei die Agentenarbeitsplätze (AGE) untereinander über ein internes Kommunikationsnetzwerk (LAN) miteinander sowie mit zumindest einem Datenserver (DSE) verbunden sind, zumindest ein Diensteserver (SPPM, SPPM') vorgesehen ist, der mit dem internen Kommunikationsnetzwerk (LAN) verbunden ist, wobei auf dem Diensteserver (SPPM, SPPM') zumindest ein automatisierter Call-Center-Dienst (DIE) zumindest teilweise und zumindest zeitweise abläuft, und der zumindest eine Diensteserver (SPPM, SPPM') über zumindest einen Vermittlungsrechner (VER, VER') mit dem öffentlichen Telekommunikationsnetz verbindbar ist,
**dadurch gekennzeichnet, dass**
auf dem Dienste-Server (SPPM, SPPM') der zumindest eine Call-Center-Dienste (DIE) von zumindest einem Dienste-Programmmittel (SPP) gesteuert wird.

18. Verfahren nach Anspruch 17,
**dadurch gekennzeichnet, dass** ein Dienste-Programmmittel (SPP) verwendet wird, welches auf dem Dienste-Server (SPPM, SPPM') abläuft.

19. Verfahren nach Anspruch 17 oder 18,
**dadurch gekennzeichnet, dass** das Dienste-Programmmittel (SPP) einheitliche Schnittstellen für die Kommunikation mit den Call-Center-Diensten (DIE) aufweist.

20. Verfahren nach einem der Ansprüche 17 bis 19,
**dadurch gekennzeichnet, dass** die Schnittstellen Softwareschnittstellen sind.

21. Verfahren nach einem der Ansprüche 17 bis 20,
**dadurch gekennzeichnet, dass** auf dem Dienste-Server (SPPM, SPPM') zumindest zeitweise Kommunikationskomponenten (KOM) für die Kommunikation der Call-Center-Dienste (DIE) mit den Vermittlungsrechnern (VER, VER') ablaufen.

22. Verfahren nach Anspruch 21,
**dadurch gekennzeichnet, dass** die Kommunikationskomponenten (KOM) zumindest teilweise von dem Dienste-Programmmittel (SPP) zur Verfügung gestellt werden.

23. Verfahren nach Anspruch 21 oder 22,
**dadurch gekennzeichnet, dass** die Kommunikationskomponenten (KOM) Softwarestacks sind.

24. Verfahren nach einem der Ansprüche 17 bis 23,
**dadurch gekennzeichnet, dass** die Dienste-Software (SPP) und/oder die Komponenten (KOM) bei einem Starten des Dienste-Servers von dem zumindest einen Dienste-Server (SPPM, SPPM') gestartet werden.

25. Verfahren nach Anspruch 24,
**dadurch gekennzeichnet, dass** die gestarteten Komponenten (KOM) bzw. die Dienste-Software (SPP) von dem zumindest einen Dienste-Server (SPPM, SPPM') initialisiert werden.

26. Verfahren nach einem der Ansprüche 17 bis 25,
**dadurch gekennzeichnet, dass** die Komponenten (KOM) bzw. die Software(SPP) stoppbar wieder anstartbar sind.

27. Verfahren nach einem der Ansprüche 17 bis 26,
**dadurch gekennzeichnet, dass** der zumindest eine Dienste-Server (SPPM, SPPM') mit zumindest einer Konsole (KON) verbindbar ist, von welcher die Komponenten (KOM) auf dem Dienste-Server und/oder die Dienste-Software (SSP) gestartet und /oder angehalten und/oder wiederangestartet werden.

28. Verfahren nach Anspruch 27,
**dadurch gekennzeichnet, dass** der Zustand einzelner Call-Center-Dienste (DIE) von der zumindest einen Konsole (KON, KON') angezeigt wird.

29. Verfahren nach Anspruch 27 oder 28,
**dadurch gekennzeichnet, dass** von den Call-Center-Diensten (DIE) Zustandsmeldungen und/oder Alarmmeldungen und/oder andere dienstspezifische Daten betreffend bzw. einen Dienste-Server (SPPM, SPPM') an die zumindest eine Konsole (KON, KON') gesendet werden, welche von der zumindest einen Konsole (KON, KON') entgegengenommen und zumindest angezeigt werden.

30. Verfahren nach Anspruch 28 oder 29,
**dadurch gekennzeichnet, dass** von den Diensten (DIE) eigene Dienste-Komponenten (DKO) zur Verfügung gestellt werden, welche auf der Konsole (KON, KON') ablaufen und die Entgegennahme dienstspezifischer Daten auf der Konsole (KON, KON') erlauben.
